# EUROPEAN PATENT SPECIFICATION

(11) **EP 1 940 585 B1**
(45) Date of publication and mention of the grant of the patent: **03.03.2010**
(21) Application number: 07727283.9
(22) Date of filing: 23.03.2007
(51) Int. Cl.: B23Q 11/00

(54) **CUTTING OR ETCHING DEVICE WITH TOOL PROVIDED WITH IMPELLER FOR SUCTION OF DUST**
SCHNEIDE- ODER ÄTZVORRICHTUNG MIT WERKZEUG MIT ANTRIEB ZUR STAUBABSAUGUNG
DISPOSITIF DE DECOUPE OU DE GRAVURE AVEC OUTIL EQUIPE D'UNE TURBINE POUR ASPIRATION DE POUSSIERE

(30) Priority: 31.03.2006 IT BO20060225
(43) Date of publication of application: 09.07.2008
(73) Proprietor: J. J. Wagner Sp. z.o.o. w organizacji, 00-175 Warszawa (PL)
(72) Inventor: COLLELUORI, Adelco, I-64026 Roseto Degli Abruzzi (te) (IT)
(74) Representative: Dall'Olio, Giancarlo
(86) International application number: PCT/EP2007/052809
(87) International publication number: WO 2007/113140

(56) References cited:
- DE-A1- 3 509 199
- DE-A1- 10 230 590
- DE-U1- 20 009 411
- US-A- 3 899 814

## Description

### FIELD OF THE INVENTION

The present invention relates to machine tools for cutting and etching articles, in particular wooden panels.

### BACKGROUND OF THE INVENTION

Numeric control machine tools are widely used for performing precision machining of wooden panels, such as transversal cutting, beading, punching, and pantograph working, to obtain a final product of improved quality.

These operations are performed by one or more tools, which are driven into rotation by relative mandrels, forming an operating head, and .are moved in the space within a given operation area, in which the rough piece to be machined is situated.

Therefore, each tool has four degrees of freedom and is subjected to actuating means, which control its movement and the cutting and/or etching operation, according to a selected model, whose dimensional parameters are stored in the software of the machine tool.

In this way, it is possible to obtain a serial production of goods, which are identical with the reference sample, beginning just from a rough piece.

In the wood manufacturing, the machine tools have usually suction means, aimed at removing fine and powdery wastes of machining (e.g. the chipboard material), in order to keep clean and free the tool working area, for example a panel surface during the etching.

According to some known systems, the suction means can include a kind of cap, functionally connected to an air suction channel and having another opening for connecting the machine operating head, maintained within the space enclosed by the cap, to the actuating means.

Moreover, the cap and the suction channel are supported by the operating head, therefore they move together therewith during the cutting and/etching of the piece to be machined, thus defining a chamber containing fine and powdery wastes, which are thrown far away during the machining.

The so defined chamber keeps the machining wastes and facilitates their suction through the relative channel, but actually, it appears to be only a partial solution of the factual inefficiency problem affecting the suction means, which are not capable of removing completely the machining wastes.

Actually, a significant part of not sucked wastes settles on the piece during its machining and it can be removed only afterwards, by an operator, after the panel cutting and/or etching operations have been completed.

The waste material is removed either by air ejecting means aimed at blowing the chipboard material off the panel surface, and the waste material is consequently spread into the surrounding environment, or by sucking it with further vacuum means, which requires more time.

Therefore, the removal operations require constant presence of operators, create pollution for the surrounding environment, and put an obvious limit to the productivity, and must be taken into consideration, when the medium time necessary for the manufacturing of each panel is calculated.

Moreover, the inability to remove satisfactorily the chipboard material from the cutting and/or etching work area during the panel machining, makes chipboard material interpose between the tool cutting head and the corresponding portion of the panel facing it, with respect to its forward movement direction, which causes mechanical stresses to the cutting head and jeopardizes the machining quality.

From the other side, the increasing the power of the vacuum source could be unadvisable and little efficient, because it would only influence the installation and use costs.

DE-35 09 199-A discloses a device according to the preamble of claim 1.

### SUMMARY OF THE INVENTION

In the light of.the above mentioned drawbacks, the object of the present invention is to propose a newly conceived solution, which allows an optimal removal of the wastes created during the etching and/or cutting of the panels.

The above object is to be obtained by proposing an operational group, which is efficient as a whole, reliable, and whose costs are relatively low with respect to the advantages to achieve.

The above mentioned objects are obtained, in accordance with the contents of the claims, by an operational group for etching and/or cutting articles, in particular panels, as defined in claim 1.

### BRIEF DESCRIPTION OF THE DRAWINGS

The characteristic features of the invention, not resulting from what has been just said, will be better pointed out in the following, in accordance with the contents of the claims and with reference to the enclosed figures, in which:
- Figure 1 is a schematic, front view of the group proposed by the invention;
- Figure 2 is a perspective, enlarged view of a particularly significant element shown in Figure 1;
- Figure 3 is a schematic, front view of the group, according to an embodiment.

### BEST MODES OF CARRYING OUT THE INVENTION

Having regards to the enclosed Figures, the reference numeral 1 indicates a tool, driven into rotation by a mandrel 2, connected to actuating means of a machine tool, not shown, since not relevant to the invention.

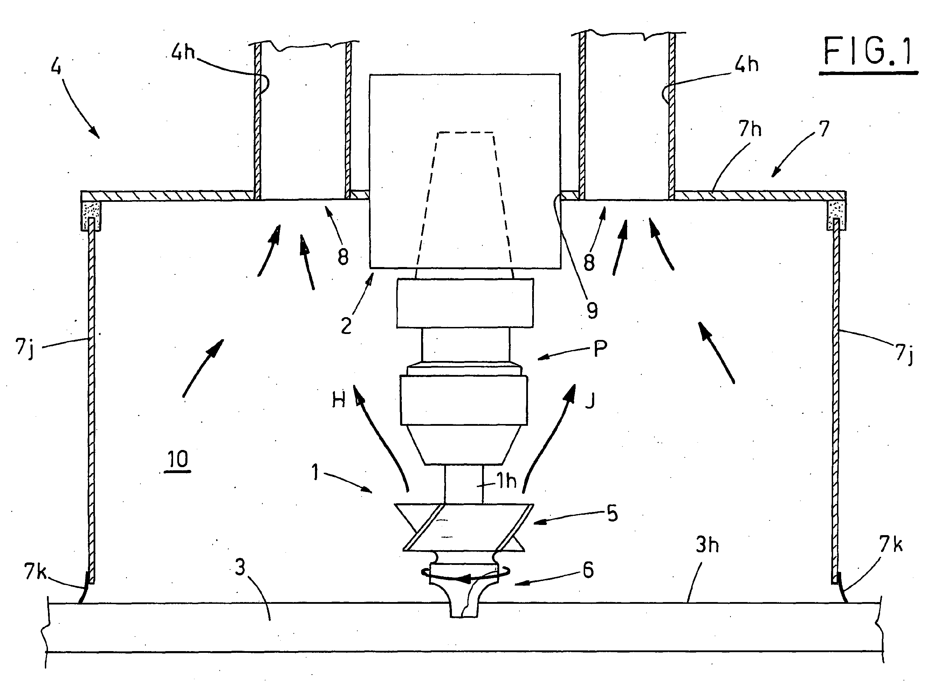

In particular, in the shown example, a toolholder element P is functionally interposed between the tool 1 and the mandrel 2 (Figure 1).

The tool 1 includes a stem 1h, whose lower end forms a head 6 for cutting and/or etching articles, such as wooden panels, and which carries, coaxial therewith, an impeller 5, situated above the head 6 and keyed onto the stem 1h, or made integral with the tool 1.

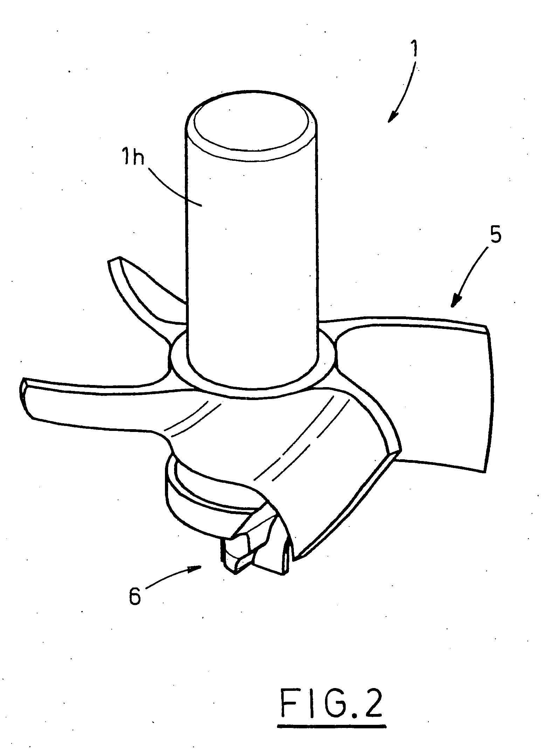

In the shown example, the impeller 5 has four blades, arranged in two identical pairs (see Figure 2), which are angularly equidistant.

Figure 1 shows a cap, generally indicated with 7, and formed by an upper portion 7h, or cover plate, and lateral walls 7j, ending with flexible elements 7k.

The cap 7 has two openings 8, communicating with related channels 4h, connected to a vacuum source, not shown, and a third opening 9, which allows the assembly formed by the tool 1, the toolholder element P and the mandrel 2, to connect with the driving means of.the machine tool.

Thus, the above assembly is partially contained within the space 10, enclosed by the cap 7 (see Figure 1), and carries the set defined by the cap and the suction channels 4h; consequently, the set translates integral with the assembly during cutting and/or etching operations.

Therefore, the set including the cap 7 and the channels 4h, along with the assembly composed of the tool 1, the toolholder element P and the mandrel 2, form an operational group aimed at cutting and/or etching of articles 3, in particular wooden panels.

The operational group is formed in such a way that during the above operations the flexible elements 7k of the lateral walls 7j go in abutment against the upper surface of the panel 3; thus encircling an inner portion 3h thereof, which, together with the cover plate 7h and the walls 7j of the cap 7, defines a suction chamber 10.

In this way, the set composed of the cap 7 and the channels 4h constitute means 4 for sucking the chipboard material waste, fine or powdery, produced by the cutting and/or etching operations, performed by the cutting head 6 on the panel 3.

The sucking of the waste material, performed by the means 4, is advantageously helped by the impeller 5, which is carried by the tool 1, and which, driven to rotate, performs a suction action on the waste produced near the cutting head 6, due to the panel cutting and/or etching operations.

The result obtained in general is the optimization of the suction effect produced by the means 4, leaving the power of the vacuum source unchanged: actually, the machining wastes are now conveyed upwards (arrows H, J) by the impeller 5 and more easily caught by the suction channels 4h.

Consequently, the quantity of fine and powdery waste produced by the cutting and/etching operations, which sets on the panel is considerably reduced, to the point that, after the machining has been completed, no operator's intervention is required to remove the waste settled on the finished product.

Further, the optimal suction action performed by the impeller 5 in correspondence to the cutting and/or etching operation area, during the panel machining, removes the waste between the tool cutting head and the corresponding portion of the panel, facing the head with respect to the panel forward movement direction, thus avoiding the drawbacks of the prior art solutions, complained about in the introductory note.

Consequently, the present invention allows to use less powerful vacuum sources with respect to the known solutions, which result in an obvious economic advantage, since it is relevant to the installation costs and energy use, which are considerably reduced.

It is obvious that the advantageous technical-functional aspects of the operational group proposed by the invention remain valid also in case there is no cap 7, but only the assembly composed of the tool 1, the toolholder element P, and the mandrel 2, as described above, and the suction channels 4h, fed by a vacuum source.

The present invention offers also the possibility to use more assemblies composed of the tool 1, the toolholder element P, and the mandrel 2, or to use only one or more assemblies composed of only the tool 1 and the mandrel 2.

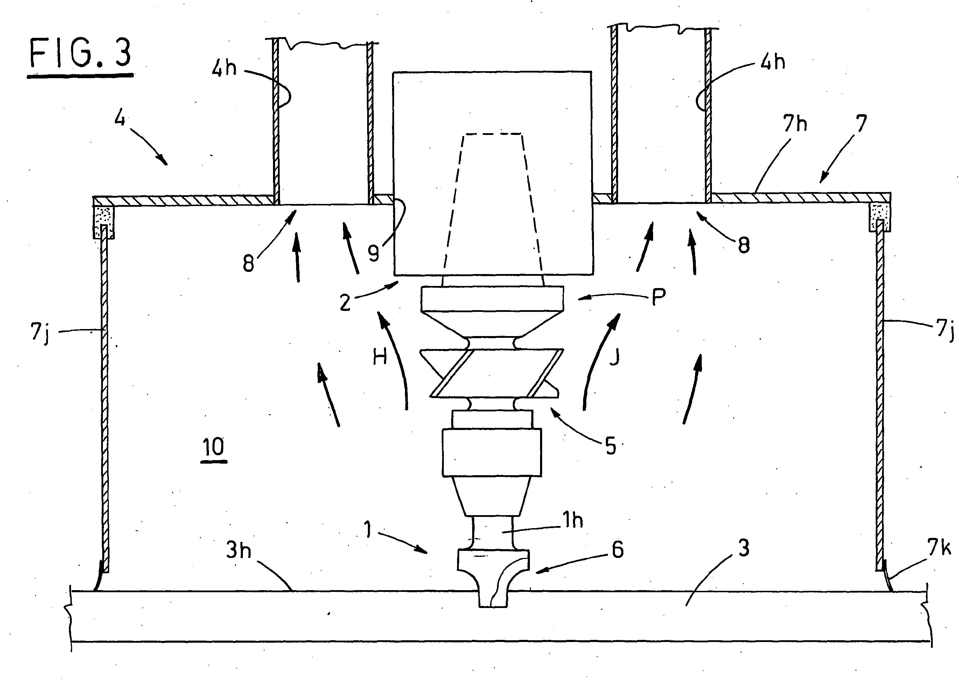

Otherwise, see Figure 3, the impeller 5 can be fastened directly to the toolholder element P, and not to the tool 1, by being keyed thereon or made integral therewith; also in this case, all the advantageous technical-functional aspects characterizing the invention according to the embodiment of Figure 1, remain valid.

It is understood that the proposed invention has been described, with reference to the enclosed figures, as a mere, not limiting example. Therefore, it is obvious that any changes or variants applied thereto according to the following claims remain within the protective scope.

## Claims

1. An operational group for etching and/or cutting underlying articles, in particular panels, including:
at least one tool (1) with a relevant stem (1h), whose lower end forms a head (6) for cutting and/or etching articles, said tool (1) being driven into rotation to cut and/or etch said articles (3);
a mandrel (2) to drive the tool into rotation, the mandrel (2) and the tool (1) forming an assembly;
a cap (7) carried by the assembly, comprising: an upper portion (7h); lateral walls (7j) enclosing at least partially the assembly and abutting against an upper surface of one of said articles (3) during said cutting and/or etching operations applied thereon; an opening (9) which allows the assembly to be connected with the driving means of the tool (1); at least one opening (8) communicating with a vacuum source, the upper portion (7h), the lateral walls (7j) and the portion of said article (3) encircled by the abutting lateral walls (7j) defining a closed suction chamber.(10);
the operational group including an impeller (5) which is situated above the head (6), is integral with the tool (1) and is coaxial with the stem (1h), and being **characterized in that** the impeller is situated below the opening (8) that communicates with the vacuum source and performs, due to rotation of the tool (1), a suction action at least near the cutting head (6) which removes fine and powdery wastes settling on said article (3) and produced by said cutting and/or etching operations, thus facilitating their subsequent suction by said vacuum source.

2. An operational group, according to claim 1, **characterized in that** said impeller (5) is keyed onto said stem (1h) near said cutting head (6) of the tool (1).

3. An operational group, according to claim 1, **characterized in that** it includes a toolholder element (P), functionally interposed between said tool (1) and mandrel (2) and **in that** said impeller (5) is keyed onto the toolholder element (P).

4. An operational group, according to claim 1, **characterized in that** it includes a toolholder element (P), functionally interposed between said tool (1) and mandrel (2) and **in that** said impeller (5) is integral with said toolholder element (P).

5. An operational group, according to claim 1, **characterized in that** it includes a suction channel (4h) functionally connected to said first opening (8) and to said vacuum source.

## Patentansprüche

1. Betriebsgruppe zum Ätzen und/oder Schneiden von darunter befindlichen Gegenständen, insbesondere Platten, mit:
mindestens einem Werkzeug (1) mit einem zugehörigen Schaft (1h), an dessen unterem Ende ein Kopf (6) zum Schneiden und/oder Ätzen von Gegenständen ausgeformt ist, wobei dieses Werkzeug (1) zum Schneiden und/oder Ätzen dieser Gegenstände (3) in Drehung versetzt wird;
einem Dorn (2), um das Werkzeug in Drehung zu versetzen, wobei dieser Dorn (2) und das Werkzeug (1) einen Aufbau bilden;
eine von dem Aufbau getragenen Kappe (7), die folgendes umfasst: einen oberen Abschnitt (7h); den Aufbau zumindest teilweise umschließende Seitenwände (7j), die während der an einem der Gegenstände (3) vorgenommenen Schneide- und/oder Ätzvorgänge an einer oberen Fläche dieses jeweiligen Gegenstands (3) anliegen; eine Öffnung (9), über die der Aufbau an die Antriebsvorrichtung des Werkzeugs (1) angeschlossen werden kann; zumindest eine Öffnung (8), die mit einer Vakuumquelle in Verbindung steht, wobei der obere Abschnitt (7h), die Seitenwände (7j) und der von den anliegenden Seitenwänden (7j) umgebene Abschnitt des Gegenstands (3) eine geschlossene Saugkammer (10) bilden;
wobei die Betriebsgruppe ein Flügelrad (5) aufweist, das sich über dem Kopf (6) befindet, am Werkzeug (1) angeformt ist und koaxial zum Schaft (1 h) verläuft, und **dadurch gekennzeichnet ist, dass** sich das Flügelrad (5) unter der Öffnung (8) befindet, die mit der Vakuumquelle in Verbindung steht, und aufgrund der Drehung des Werkzeugs (1) eine Sogwirkung zumindest in der Nähe des Schneidkopfs (6) ausübt, wodurch durch die Schneide- und/oder Ätzvorgänge anfallende Ablagerungen feiner und staubförmiger Abfälle auf dem Gegenstand (3) entfernt werden und somit ihr anschließendes Absaugen durch die Vakuumquelle erleichtert wird.

2. Betriebsgruppe nach Anspruch 1, **dadurch gekennzeichnet, dass** das Flügelrad (5) in der Nähe des Schneidkopfes (6) des Werkzeugs (1) auf den Schaft (1h) aufgekeilt ist.

3. Betriebsgruppe nach Anspruch 1, **dadurch gekennzeichnet, dass** sie ein Werkzeughalterelement (P) aufweist, das funktionsfähig zwischen dem Werkzeug (1) und dem Dorn (2) eingefügt ist, und dass das Flügelrad (5) auf das Werkzeughalterelement (P) aufgekeilt ist.

4. Betriebsgruppe nach Anspruch 1, **dadurch gekennzeichnet, dass** sie ein Werkzeughalterelement (P) aufweist, das funktionsfähig zwischen dem Werkzeug (1) und dem Dorn (2) eingefügt ist, und dass das Flügelrad (5) am Werkzeughalterelement (P) angeformt ist.

5. Betriebsgruppe nach Anspruch 1, **dadurch gekennzeichnet, dass** sie einen Saugkanal (4h) aufweist, der funktionsfähig mit der ersten Öffnung (8) und der Vakuumquelle verbunden ist.

## Revendications

1. Groupe fonctionnel destiné à graver et/ou à découper des articles sous-jacents, plus particulièrement des panneaux, ledit groupe fonctionnel comprenant:
au moins un outil (1) comportant une tige adéquate (1h), dont l'extrémité inférieure forme une tête (6) destinée à découper et/ou à graver des articles, lequel outil (1) étant entraîné en rotation pour découper et/ou graver lesdits articles (3) ;
un mandrin (2) destiné à entraîner l'outil en rotation, lequel mandrin (2) et outil (1) forment un ensemble ;
un capuchon (7) supporté par l'ensemble comprenant : une partie supérieure (7h) ; des parois latérales (7j) entourant l'ensemble au moins en partie et s'appuyant contre une surface supérieure d'un des articles (3) au cours desdites opérations de découpe et/ou de gravure qui lui sont appliquées ; une ouverture (9) permettant à l'ensemble d'être connecté aux moyens d'entraînement de l'outil (1), au moins une ouverture (8) communiquant avec une source de vide, la partie supérieure (7h), les parois latérales (7j) et la partie dudit article (3) enveloppée par les parois latérales en appui (7j) définissant une chambre d'aspiration close (10) ;
le groupe fonctionnel comprenant une turbine (5) située au-dessus de la tête (6), solidaire de l'outil (1) et coaxiale avec la tige (1h), et **caractérisé en ce que** la turbine est située en-dessous de l'ouverture (8) communiquant avec la source de vide et met en oeuvre, par rotation de l'outil (1), une action d'aspiration au moins à proximité de la tête de découpe (6) qui élimine les déchets fins et poudreux se déposant sur ledit article (3) et produits par lesdites opérations de découpe et/ou de gravure, ce qui facilite leur aspiration ultérieure par ladite source de vide.

2. Groupe fonctionnel selon la revendication 1, **caractérisé en ce que** ladite turbine (5) est fixée sur ladite tige (1h) à proximité de ladite tête de découpe (6) de l'outil (1).

3. Groupe fonctionnel selon la revendication 1, **caractérisé en ce qu'**il comprend un élément porte-outil (P) intercalé de façon fonctionnelle entre ledit outil (1) et le mandrin (2) et **en ce que** ladite turbine (5) est fixée sur l'élément porte-outil (P).

4. Groupe fonctionnel selon la revendication 1, **caractérisé en ce qu'**il contient un élément porte-outil (P), intercalé de façon fonctionnelle entre ledit outil (1) et le mandrin (2) et **en ce que** ladite turbine (5) est solidaire dudit élément porte-outil (P).

5. Groupe fonctionnel selon la revendication 1, **caractérisé en ce qu'**il contient un canal d'aspiration (4h) connecté de façon fonctionnelle à ladite première ouverture (8) et à ladite source de vide.
